# EUROPEAN PATENT SPECIFICATION

(11) **EP 0 488 695 B1**
(45) Date of publication and mention of the grant of the patent: **19.03.1997**
(21) Application number: 91310967.4
(22) Date of filing: 27.11.1991
(51) Int. Cl.: H01T 4/08, H02B 13/035

(54) **Surge suppression in electric apparatus**
Unterdrückung von Überspannungen in elektrischen Vorrichtungen
Dérivation de surtension dans appareil électrique

(30) Priority: 30.11.1990 JP 330704/90; 20.03.1991 JP 57094/91
(43) Date of publication of application: 03.06.1992
(73) Proprietor: HITACHI, LTD., Chiyoda-ku, Tokyo 101 (JP)
(72) Inventor: Ohmori, Takashi, Hitachi-shi, Ibaraki 316 (JP); Nishimura, Kazuhiko, Hitachi-shi, Ibaraki 317 (JP); Yamagiwa, Tokio, Hitachi-shi, Ibaraki 316 (JP); Tagawa, Yoshinori, Hitachi-shi, Ibaraki 316 (JP)
(74) Representative: Stoner, Gerard Patrick

(56) References cited:
- EP-A- 0 369 280
- DE-A- 3 216 275
- PATENT ABSTRACTS OF JAPAN, vol. 14, no. 312 (E-948) 5 July 1990 & JP-A-21 01 908
- PATENT ABSTRACTS OF JAPAN, vol. 14, no. 239 (E-930) 21 May 1990 & JP-A-20 65 019
- PATENT ABSTRACTS OF JAPAN, vol. 15, no. 40 (E-1028) 30 January 1991 & JP-A-22 76 404
- PATENT ABSTRACTS OF JAPAN, vol. 14, no. 161 (E-909) 28 March 1990 & JP-A-20 17 809
- Derwent Publications Ltd., London, GB; AN 75-G4574W & DE-A-2 430 185
- PATENT ABSTRACTS OF JAPAN, vol. 14, no. 255 (E-935) 31 May 1990 & JP-A-20 74 108

## Description

This invention relates to an electric apparatus comprising means for suppressing high-frequency surges. In preferred aspects it relates to large-scale, high-voltage, high-current apparatus in which means are provided for disconnecting or otherwise switching a main current flow. It may find particular application in gas-insulated switchgear such as is used at electric sub-stations, distribution lines and the like.

A known general type of such apparatus has main conducting elements extending along inside a grounded tank, with an insulating substance e.g. an insulating gas, commonly SF₆, in the tank around the conductors. Gas-insulated apparatus has found widespread use e.g. at electric sub-stations, where it may be used to switch very high voltages - typically between 100 and 1,000 kV - operating at very high currents - typically over 1,000 A and having interrupting currents as high as 50 kA or higher.

Such apparatus conventionally comprises at least one large and specially-designed circuit breaker adapted to stop the flow of operational current. This usually has special means, such as SF₆ gas blasters, for extinguishing arcs formed as the current is broken. It is also conventional to provide a disconnector in the conductive path associated with the circuit breaker, to isolate the circuit breaker from the operating voltage when the current is not flowing.

A further common feature in such apparatus is connection of the conducting path in the apparatus to a transmission line by way of a bushing, or in some instances to an underground cable.

A large sub-station may include several circuit breakers, associated disconnectors, and one or more main bus conductors linking them.

High-frequency surge is a known problem in electric apparatus. Even a transient high-frequency phenomenon at high voltage can cause damage to apparatus components. In particular, such surges may cause deterioration in the dielectric strength of spacer and support components which are used to mount conductors inside the grounded tank, and this can lead to discharge accidents.

A well-known surge problem arises when switching is performed in apparatus e.g. at a circuit breaker or disconnector. For example, when a disconnector is opened after a circuit breaker has been operated, the opening operation may take a few hundred milliseconds i.e. a few cycles of the operating frequency, and a re-striking current occurs across the disconnector to the capacitive effect of the open circuit breaker. At each re-strike across the disconnector, a very high-voltage and high-frequency surge occurs. The frequency may be as high as several MHz, maybe several tens of MHz. These surges are potentially damaging, as mentioned above.

The prior art contains a number of proposals for dealing with such disconnection surges.

JP-UM-62-3874 (1987) describes arrangements which include a resistor in the conductive path, or in parallel therewith, when current is disconnected. However, the special disconnector including the resistor is very bulky.

JP-A-61-254011 (1986) is me of several proposals which suggests a ring of magnetic material around the conduction path. A magnetic ring offers a frequency-dependent impedance and is able to suppress high-frequency surges without interfering with operational frequency current at other times.

In JP-A-61-66510 (1986), multiple magnetic rings are proposed around the main conductor, each having a curved metal shield to reduce field strength concentration at edges of the material.

JP-UM-61-41367 (1986) describes an arrestor in which a magnetic ring is put around a conductor for diverting e.g. a lightning strike via a flashover gas gap to earth.

JP-UM-58-22808 (1983) describes use of a magnetic ring around a main conductor to dampen surge caused by operating a vacuum circuit breaker.

JP-A-2101908 discloses a surge-suppressor having branch conductors branching off a main conductor. The surge suppressor is a magnetic ring which surrounds the main conductor. When a high frequency voltage wave arising from connection/disconnection reaches a branch section the propagation mode of the wave is changed in such a way that absorption by the surge suppressor on the main conductor is improved.

The present inventors have noted that the prior proposals only offer limited surge protection. In particular, while they generally protect against disconnection surge, they do not protect adequately against surges arising while operational current is flowing in the main conductor. Lightning-originating surge is an example. A lightning surge only has a frequency comparable with a disconnection surge when it results from a strike near the apparatus, but even in other cases it can still have a damaging high-frequency effect.

According to the present invention we provide electric apparatus comprising a main current-carrying conductor for carrying a main operational current, and which extends through a grounded tank containing an insulator around the main conductor, a high-frequency surge suppressor being provided on a branch conductor which branches off from the main current-carrying conductor and is connected conductively thereto, wherein the branch conductor provides a localised relatively high capacitance to earth and thereby a relatively low impedance to high frequency surge as compared with the operational current.

We have realised that, by avoiding saturation of surge suppressors e.g. magnetic rings, by a flow of operational current therethrough (as occurred in the prior art) the surge suppressors can then retain their efficiency to suppress a surge arising when operational current is flowing e.g. as a result of lightning. This was not previously perceived.

A number of specific aspects are proposed for enabling avoiding saturation of suppressors by operational current.

In particular, our proposed apparatus enables inhibiting a high-frequency surge from an exterior source, such as a lightning strike, entering electric apparatus having a main conductive path extending in a grounded tank with an insulator in the tank around the main conductive path, under operating conditions in which a relatively low frequency operational current is flowing in the main conductive path, by
diverting the high-frequency surge along the branch conductor which branches from the main conductive path and which has a localised high capacitance to earth and thereby a low impedance to high frequency surge relative to the operational current, and
suppressing the surge by a surge suppressor on the branch conductor.

Correspondingly, we provide electric apparatus, such as a substation or distribution line, comprising a main current-carrying conductor for carrying a main operational current, and which extends through a grounded tank containing an insulator around the main conductor, a high-frequency surge suppressor being provided on a branch conductor which branches off from the main current-carrying conductor and is connected conductively thereto.

We have found that a branch conductor can be constructed to divert high-frequency surge preferentially in relation to operational frequency current. In particular, such a branch may be constructed to have a localised high capacitance to earth and hence a low impedance to high frequency compared with low, operational, frequency. So, a surge suppressor located on such a branch is not subjected to a saturating flow of low-frequency current, but nevertheless can be an effective measure against high-frequency phenomena. Such a branch conductor with surge suppressor may be provided at one or more of various suitable locations along a main conductor. The branch may lead to e.g. an arrestor, transformer, or grounding device. It may be a "blind" branch provided solely for surge suppression purposes, e.g. at the end of a bus conductor inside the grounded tank thereof. Such a blind branch is therefore functionless apart from surge suppression, and does not lead to any functional component.

It is particularly desirable to position a surge suppressor on the branch near an insulating support or spacer used between the grounded tank and conductor. Where the spacer/support engages the branch itself, the suppressor is most advantageously nearer to the main conductor than any such spacer.

Materials for surge-suppressors are generally well-known to the skilled man, who will be able to select an appropriate material. In particular, magnetic materials such as ferrite are suitable. A suppressor may comprise a ferrite core, and/or a shaped body of magnetic powder e.g. ferrite.

The chosen suppressor may have a higher suppression for moderately high frequencies e.g. below 500 kHz, than for the very high frequencies associated with disconnection surges e.g. 1 MHz and above. Or, similar suppressors may be used for both functions.

The electric apparatus may take a number of forms, since many are subject to surges of the type described. Particular application is envisaged to switching stations or "switchgear". Usually this includes at least a circuit breaker, and usually also one or more disconnectors. A station of substantial size usually also has one or more buses, often three-phase, and these likewise generally run in grounded tanks.

An insulator used in the grounded tanks is usually a gas, and most preferably SF₆ gas.

Where the electric apparatus has a connection to a transmission line and also a disconnector, a surge suppressor embodying the invention is preferably positioned on the transmission line side of the disconnector rather than on the other side - typically towards a circuit breaker. For example, a special suppression means may be provided at or near a bushing leading to the transmission line. The main switching components in the tank may thus take a conventional form without special adaptation.

Embodiments of the invention are now described by way of example with reference to the accompanying drawings, in which:
Figure 1 is a transverse view of a gas-insulated switchgear;
Figure 2 shows a branch conductor to a voltage transformer;
Figure 3 shows a branch conductor to a grounding device;
Figure 4 shows branch conductors on bus conductors;
Figure 5 shows branch conductors at the ends of a bus;
Figures 6 and 7 show (schematically) alternative dispositions of a surge suppressor.

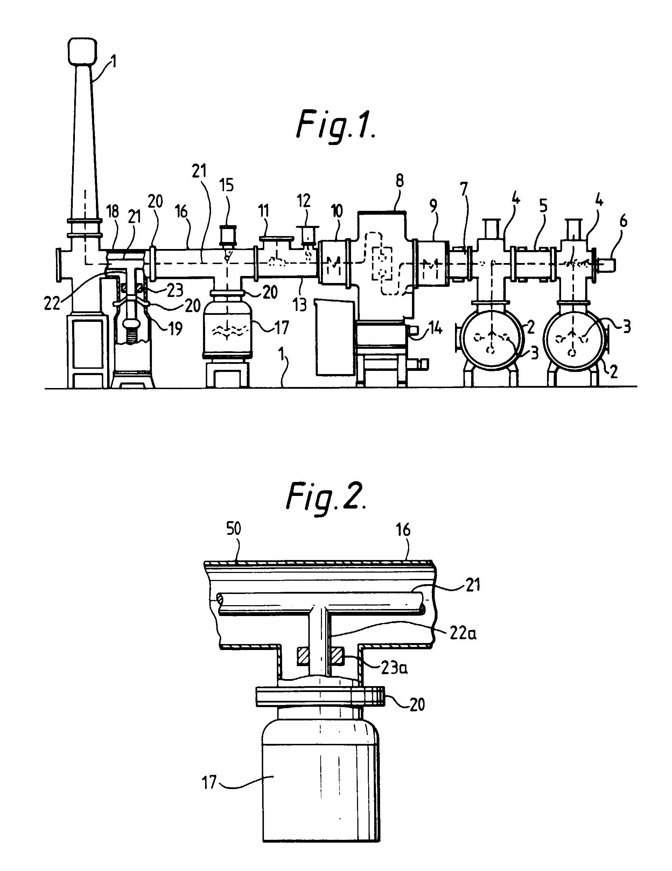

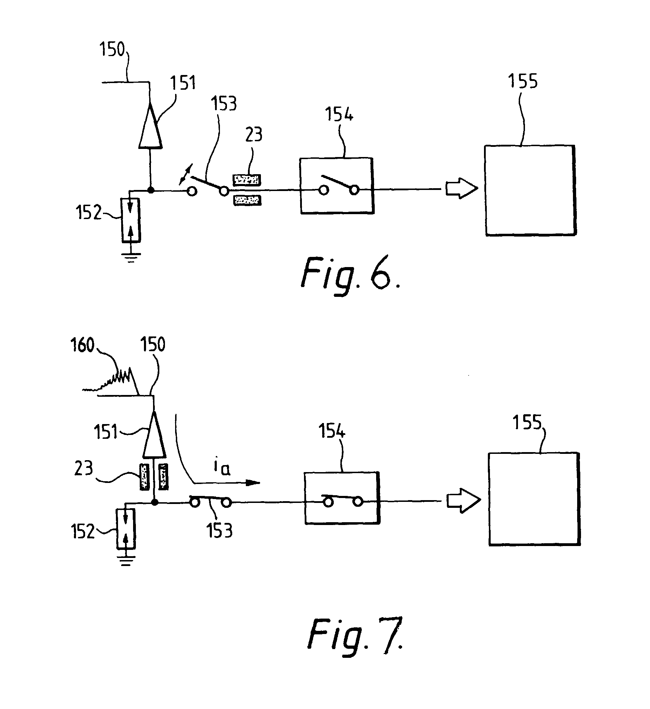

Fig. 1 illustrates an embodiment of the present invention adapted to a transmission line unit of a gas-insulated switchgear that transmits electric power via a bushing 1. In this embodiment, only the buses are constituted in a phase separated type. The gas-insulated switchgear basically consists of bus conductors 3 (three phase) in the tanks (shown as reference numeral 50 in Figs 6-9) of buses 2 arranged in parallel on the installation surface 1. A bus disconnector 4 is provided over each of the buses 2. The disconnectors 4 for buses are connected together via a connection bus 5. A grounding device 6 is provided for the disconnector 4 for the bus on the right side in Fig. 1. The disconnector 4 for the bus on the left side is connected, via a connection bus 7, to a current transformer 9 which is provided on one side of a circuit breaker 8. A current transformer 10 provided on the other side of the circuit breaker 8 is connected to one side of a connection bus 13 which is equipped with a disconnector 11 for line and with a grounding device 12. An operation machine is provided under the disconnector 8, for controlling the circuit breaker. To the other side of the connection bus 13 is connected a connection bus 16 which is equipped with a grounding device 15. To the connection bus 16 is connected a voltage transformer 17 that is provided on the installation surface 1. To the other side of the connection bus 16 is connected a further connection bus 18. The bushing 1 is connected to the connection bus 18. The above-mentioned buses 2, disconnectors 4 for buses, connection buses 5 and 7, current transformers 9 and 10, a circuit breaker 8, connection buses 13, 16 and 18, voltage transformer 17 and arrestor 19 are filled with an insulating gas (SF₆), and are partitioned by insulating spacers 20. Reference numeral 21 denotes a bus conductor that serves as a main current path.

In this embodiment, a magnetic material 23 (a ferrite ring) that serves as a high-frequency surge suppression portion is disposed to surround a branch conductor 22 that is branched from the bus conductor 21 and leads to the insulator spacer 20 at the inlet portion of the arrestor 19. The magnetic material 23 is provided for the branch conductor 22 branched from the bus conductor 21 that serves as the main current path and so will not be magnetically saturated when the electric current is permitted to flow ordinarily. Furthermore, the branch conductor 22 is connected, via arrestor 19, to a portion having a relatively large electrostatic capacity to earth and thereby exhibits a small impedance at this portion. Therefore, currents of a commercial frequency scarcely flow through this portion while currents of high frequencies easily flow.

Being constituted as described above, it is now presumed that a switching surge of a high frequency is generated by the switching operation of, for example, the disconnector 5. The surge generated at this time has a frequency which is very high e.g. about several megahertz to several tens of megahertz. It propagates from the branch conductor 22 towards the arrestor 19 which has a large electrostatic capacity to earth, via the bus conductor 21. However, the surge voltage is absorbed by the surge-absorbing ability of the magnetic material 23 that is located in front of the insulating spacer 20. This makes it possible to prevent dielectric breakdown that may take place along the surface of the insulating spacer 20. Even a surge of a sharp wave can be absorbed. Furthermore, a residual surge caused by reflection can be reliably absorbed.

Fig. 2 illustrates another embodiment of the present invention, wherein the invention is adapted to the input portion of the transformer 17 that is shown in Fig. 1. Concretely speaking, as shown in Fig. 2, magnetic material 23a is provided for the branch conductor 22a that is branched from the bus conductor 21 to the transformer 17.

This constitution makes it possible to obtain similar effects to those of the aforementioned embodiment.

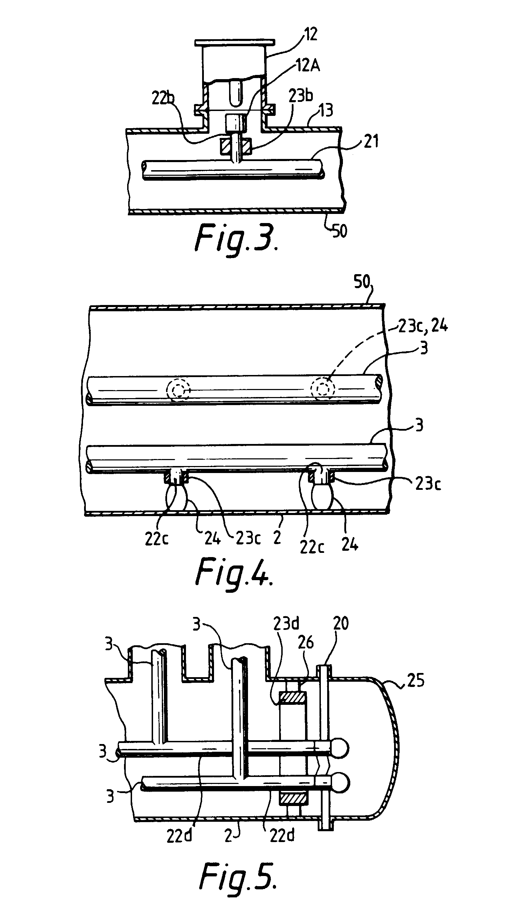

Fig. 3 illustrates a further embodiment of the present invention in which the magnetic ring 23b is provided around a branch conductor 22 that is branched from the main bus conductor 21 to a grounding device 12. The branch conductor 22b is connected to an extended fixed contactor 12A of the grounding device 12, not the movable outer rod.

Fig. 4 illustrates a further embodiment in which the magnetic material 23c is provided for the branch conductors 22c formed between the bus conductors 3 and the insulating supports 24 that support the bus conductors 3 in the tank 50 of bus 2.

Fig. 5 illustrates a further embodiment of the present invention wherein magnetic materials are arranged at an end portion of the tank 50 of a bus 2. Specifically, branch conductors 22d from the bus conductors 3 project through insulating spacers 20, into an end chamber 25 filled with an insulating gas, and the magnetic materials 23d are provided between the insulating spacers 20 and the portions of the branch conductors 22d branched from the bus conductors 3. The magnetic materials 23d are supported by support members 26 provided on the inner surface of the tank of bus 2. In this case, a single magnetic ring 23d surrounds all the branches 22d.

With the apparatus as described above, the surge voltage generated by the opening and closure of, for example, the disconnector 4 may flow along the bus conductors to reach the insulating spacers 20, but is absorbed by the magnetic materials 23, making it possible to prevent the dielectric breakdown that may take place along the surfaces of the insulating spacers 20.

Furthermore, the operational current does not directly pass through the magnetic suppressors which are therefore not saturated and can absorb a surge from an exterior source e.g. lightning as a result.

Although the aforementioned embodiments have dealt with the cases where three-phase buses are used, it should be noted that the invention can be adapted to the cases of single-phase buses in the same manner as above. The magnetic material may be a ferrite core or a molded body obtained by molding a magnetic powder. Furthermore, the magnetic materials 23 may be arranged at the aforementioned places in combination.

The difference between lightning surge and "internal" surge is described with reference to Figs. 6 and 7, that are circuit diagrams of a gas-insulated electric apparatus.

The gas-insulated electric apparatus includes e.g. an arrestor 152, a disconnector 153, a circuit breaker 154 and the like, with one end of the main conductor being connected to a transmission line 150 via a lead-in bushing 151 and the other end being connected to a substation facility 155 such as a transformer. A ring-like magnetic suppressor 23 is provided for the disconnector 153, towards the circuit breaker 154. Fig. 10 illustrates the case where the disconnector 153 is opened and closed under the condition where the circuit breaker 154 is opened. Under this condition, although the flow of current is interrupted by the circuit breaker 154, a surge voltage of high frequency generates in the gas-insulated electric apparatus when the disconnector 153 is opened or closed. However, if the magnetic material 23 is arranged for the disconnector 153 on the side of the circuit breaker 154 as shown, high-frequency surge is absorbed by the magnetic material 23 and is prevented from infiltrating into the circuit breaker 154.

However, in the case where a high-frequency surge 160 has infiltrated via the transmission line 150 under the condition where the circuit breaker 154 is closed as shown in Fig. 11, an electric current iₐ continues to flow since the circuit breaker 154 is closed. Depending upon its characteristics the magnetic material 23 is liable to be saturated due to the electric current iₐ and sufficient surge suppressing effect is not achieved.

Under the condition where the circuit breaker 154 is opened as shown in Fig. 6, no electric current flows through the current-carrying conductor of the portion where the magnetic material 23 is disposed and, hence, the magnetic material is not saturated by the electric current. On the other hand, a surge that has infiltrated into the transmission line 150 under the condition where the circuit breaker 154 is closed as shown in Fig. 7 flows through the current-carrying conductor of the portion where the magnetic material 23 is disposed, arousing the problem of saturation of the magnetic material by the electric current.

When the disconnector 153 is opened and closed under the aforementioned condition, a high-frequency surge of about 1 to 10 MHz arises though it may vary depending upon the constituent conditions of the circuit. The magnetic material 23 composed of e.g. ferrite can be effectively used for suppressing the surge. Further, when the surge enters from the transmission line 150 under the latter condition, there generates high-frequency surge having frequencies lower than those of the surge of when the disconnector 153 is opened or closed, i.e., having frequencies of about 250 to 500 kHz. Therefore, the magnetic material 23 may be composed of a material that suppresses frequencies lower than those of the material employed for suppressing the surge of when the disconnector is opened and closed.

As will be understood from the above description, the magnetic material tends to be saturated when the electric current iₐ flows under the condition where the circuit breaker 154 is closed. Therefore, it is desired to provide the magnetic material described above on the side of the transmission line rather than the other side of the disconnector 153 in Fig. 7 and, more desirably, on the side of the transmission line of the gas-insulated electric apparatus. The present techniques need not necessarily be used for the magnetic materials that are provided on the side of the circuit breaker 154 rather than on the side of the disconnector 153.

## Claims

1. Electric apparatus comprising a main current-carrying conductor (21;3) for carrying a main operational current, and which extends through a grounded tank (50) containing an insulator around the main conductor (21;3), a high-frequency surge suppressor (23) being provided on a branch conductor (22) which branches off from the main current-carrying conductor and is connected conductively thereto, wherein the branch conductor (22) provides a localised relatively high capacitance to earth and thereby a relatively low impedance to-high frequency surge as compared with the operational current.

2. Electric apparatus according to claim 1 in which the branch conductor (22) leads to an arrestor (19).

3. Electric apparatus according to claim 1 in which the branch conductor (22) leads to a voltage transformer (17).

4. Electric apparatus according to claim 1 in which the branch conductor (22) leads to a grounding device (12) enabling grounding of the main conductor (21).

5. Electric apparatus according to any one of the preceding claims in which an insulating support (20) engages the branch conductor (22) in the grounded tank (50) to support it relative thereto, and the surge suppressor (23) is provided around the branch conductor (22) between the main conductor (21;3) and the insulating support.

6. Electric apparatus according to any one of the preceding claims in which the surge suppressor comprises a ferrite material.

7. Electric apparatus according to any one of the preceding claims in which the insulator in the grounded tank is SF₆ gas.

8. Electric apparatus according to any one of the preceding claims in which the main conductor is supported in the grounded tank by plural supports (20) of solid insulating material.

9. Electric apparatus according to any one of the preceding claims which is a high-voltage, high-current switching station having at least a circuit breaker (8), a disconnector (11), and a bus (2) in the grounded tank.

## Patentansprüche

1. Elektrische Vorrichtung mit einer stromführenden Hauptleitung (21; 3) zum Führen eines Hauptbetriebstroms, der in einem geerdeten Behälter mit einem die Hauptleitung (21; 3) umgehenden Isolator verläuft, einem Hochfrequenzüberspannungsunterdrücker (23), der auf einer Abzweigleitung vorgesehen ist, die von der stromführenden Hauptleitung abzweigt und leitend mit dieser verbunden ist, wobei der Abzweigleitung (22) eine örtlich begrenzte, relativ hohe Kapazität in bezug zur Erde und dadurch eine relativ niedrige Impedanz in bezug auf die Hochfrequenzüberspannung im Vergleich zum Betriebstrom aufweist.

2. Elektrische Vorrichtung gemäß Anspruch 1, bei dem die Abzweigleitung (22) in einen Überspannungsleiter (19) führt.

3. Elektrische Vorrichtung gemäß Anspruch 1, bei dem der Abzweigleitung (22) zu einem Überspannungsableiter (17) führt.

4. Elektrische Vorrichtung gemäß Anspruch 1, bei dem die Abzweigleitung (22) zu einer Erdungsvorrichtung (12), die ein Erden der Hauptleitung (21) ermöglicht, führt.

5. Elektrische Vorrichtung gemäß einem der vorstehenden Ansprüche, bei dem ein isolierendes Trägerteil (20) an der Abzweigleitung (22) im geerdeten Behälter (50) angreift, um diese relativ dazu zu halten, und der Überspannungsunterdrücker (23) um die Abzweigleitung (22) zwischen der Hauptleitung (21; 3) und dem isolierenden Trägerteil vorgesehen ist.

6. Elektrische Vorrichtung gemäß einem der vorstehenden Ansprüche, bei dem der Überspannungsunterdrücker ein Ferrit-Material aufweist.

7. Elektrische Vorrichtung gemäß einem der vorstehenden Ansprüche, bei dem der Isolator im geerdeten Tank SF₆ Gas ist.

8. Elektrische Vorrichtung gemäß einem der vorstehenden Ansprüche, bei dem die Hauptleitung im geerdeten Behälter durch eine Vielzahl von Trägerteilen (20) aus festen Isoliermaterial abgestützt wird.

9. Elektrische Vorrichtung gemäß einem der vorstehenden Ansprüche, bei dem eine Hochspannungs- Starkstrom-Schaltstation wenigstens einen Schaltungsunterbrecher (8), einen Abschalter (11) und einen Bus (2) im geerdeten Behälter aufweist.

## Revendications

1. Dispositif électrique comportant un conducteur principal (21; 3) de circulation de courant pour faire circuler un courant principal de fonctionnement et qui traverse un coffret (50) mis à la terre contenant un isolant autour du conducteur principal (21; 3) de courant, un suppresseur (23) de surtension haute fréquence étant disposé sur un conducteur secondaire (22) en dérivation du conducteur principal de circulation de courant et relié de manière conductrice à celui-ci, le conducteur secondaire (22) assurant, comparativement au courant de fonctionnement, une capacité localisée relativement forte par rapport à la terre et de ce fait une impédance relativement basse par rapport à une surtension haute fréquence.

2. Dispositif électrique selon la revendication 1, dans lequel le conducteur secondaire (22) aboutit à un parafoudre (19).

3. Dispositif électrique selon la revendication 1, dans lequel le conducteur secondaire (22) aboutit à un transformateur (17) de tension.

4. Dispositif électrique selon la revendication 1, dans lequel le conducteur secondaire (22) aboutit à un dispositif (12) de mise à la terre permettant la mise à la terre du conducteur principal (21).

5. Dispositif électrique selon l'une quelconque des revendications précédentes, dans lequel un support isolant (20) est en engagement avec le conducteur secondaire (22) dans le coffret (50) à la terre pour le supporter par rapport à celui-ci, et le suppresseur (23) de surtension est disposé autour du conducteur secondaire (22) entre le conducteur principal (21; 3) et le support isolant.

6. Dispositif électrique selon l'une quelconque des revendications précédentes, dans lequel le suppresseur de surtension comprend de la ferrite.

7. Dispositif électrique selon l'une quelconque des revendications précédentes, dans lequel l'isolant présent dans le coffret à la terre est du SF6 gazeux.

8. Dispositif électrique selon l'une quelconque des revendications précédentes, dans lequel le conducteur principal est supporté dans le coffret à la terre par plusieurs supports (20) en matière isolante solide.

9. Dispositif électrique selon l'une quelconque des revendications précédentes, qui consiste en un poste de commutation haute tension, forte intensité, comprenant au moins un disjoncteur (8), un sectionneur (11) et un bus (2) dans le coffret à la terre.
